(19) Europäisches Patentamt
European Patent Office
Office européen des brevets

(11) **EP 3 712 559 A1**

(12) **DEMANDE DE BREVET EUROPEEN**

(43) Date de publication:
**23.09.2020 Bulletin 2020/39**

(51) Int Cl.:
***G01C 17/38*** (2006.01)   ***G01C 25/00*** (2006.01)

(21) Numéro de dépôt: **20163481.3**

(22) Date de dépôt: **17.03.2020**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **18.03.2019  FR 1902754**

(71) Demandeur: **Thales**
**92400 Courbevoie (FR)**

(72) Inventeurs:
• **BOURLAND, Jean-Claude**
**26000 VALENCE Cedex (FR)**
• **SAHLIGER, Frédéric**
**26000 VALENCE Cedex (FR)**

(74) Mandataire: **Lavoix**
**2, place d'Estienne d'Orves**
**75441 Paris Cedex 09 (FR)**

(54) **PROCÉDÉ D'ESTIMATION DES VALEURS D'HARMONISATION D'UN MAGNÉTOMÈTRE INSTALLÉ DANS UN ENGIN MOBILE, DISPOSITIF ET PROGRAMME D'ORDINATEUR ASSOCIÉS**

(57)     Procédé d'estimation des valeurs d'harmonisation d'un magnétomètre (2) installé dans un engin mobile, ledit magnétomètre étant associé à son repère de référence XM, YM, ZM, ledit procédé, mis en œuvre, par un dispositif électronique, comprenant l'acquisition de valeurs de champ magnétique mesurées par le magnétomètre et détermination de l'harmonisation horizontale (hx, hy) par:
- estimation d'un premier angle égal à l'angle entre XM et le grand axe d'une ellipse, définie dans le plan comprenant les deux axes XM, ZM, par lesdites valeurs de champ acquises ;
- détermination de hy comme égale audit premier angle estimé,
- estimation d'un deuxième angle égal à l'angle entre YM et le grand axe d'une ellipse définie, dans le plan comprenant les deux axes YM, ZM, par lesdites valeurs de vecteurs de champ acquises ;
- détermination de - hx comme égale audit deuxième angle estimé.

FIG.3

EP 3 712 559 A1

**Description**

La présente invention concerne le domaine de la détermination du cap magnétique d'un engin mobile à partir de mesures du champ magnétique terrestre par un magnétomètre installé dans l'engin mobile.

Plus particulièrement, l'invention se rapporte à un procédé d'estimation des valeurs d'harmonisation d'un magnétomètre installé dans un engin mobile, ledit magnétomètre étant associé à son repère de référence XM, YM, ZM et l'engin mobile étant associé à son repère aéronef XA, YA, ZA, ledit procédé comprenant une étape d'acquisition d'une pluralité de valeurs de vecteurs de champ magnétique mesurées par le magnétomètre correspondant à des positionnements successifs de l'engin mobile selon des caps successifs variés.

Dans l'élaboration d'un cap magnétique, la connaissance de l'orientation, dans un repère de référence, du magnétomètre tel qu'installé est nécessaire géométriquement, sinon le calcul de cap magnétique est erroné. En effet, le calcul de cap magnétique doit être élaboré à partir de la projection dans un plan horizontal du repère géographique local des composantes de champ magnétique mesurées dans le repère magnétométrique.

Le repère du magnétomètre (plus précisément le trièdre de mesures du capteur magnétomètre) une fois installé peut ne pas être aligné avec le repère de référence, ce qui introduit des erreurs angulaires dans le calcul du cap magnétique, la dégradation s'ajoutant à la non-horizontalité de piste dans le cas de mesure au sol.

Pour connaître ces défauts, dits défauts d'harmonisation, il existe une procédure de mesure lourde par visée optique sur l'engin mobile, qui impose des vérifications à plusieurs étapes lors de la fabrication des tronçons dans le cas d'un avion. La première alternative est de contraindre la précision d'installation du support du magnétomètre sur la structure de l'aéronef (contrainte lourde et pas faisable sur certaines zones). La seconde alternative est d'identifier ces harmonisations lors d'une compensation en vol complète (contrainte de procédure en vol à ce jour avec un profil prédéfini en vol).

Le but de l'invention est de proposer une solution qui permette de calculer simplement, en diminuant de façon notable le temps et la complexité, les angles d'harmonisation horizontale.

A cet effet, suivant un premier aspect, l'invention propose un procédé d'estimation des valeurs d'harmonisation d'un magnétomètre installé dans un engin mobile, du type précité caractérisé en ce que qu'il comprend en outre une étape de détermination de l'harmonisation horizontale (hx, hy) où hx correspond à l'angle d'Euler associé à la rotation autour de XA, où hy correspond à l'angle d'Euler associé à la rotation autour de YA pour passer du repère de référence XM, YM, ZM du magnétomètre au repère avion XA, YA, ZA comprenant les étapes suivantes :

- estimation d'un premier angle égal à l'angle entre XM et le grand axe d'une ellipse définie dans le plan comprenant les deux axes XM, ZM par lesdites valeurs de champ acquises ;
- détermination de hy comme égale audit premier angle estimé ;
- estimation d'un deuxième angle égal à l'angle entre YM et le grand axe d'une ellipse définie dans le plan comprenant les deux axes YM, ZM par lesdites valeurs de vecteurs de champ acquises ;
- détermination de - hx comme égale audit deuxième angle estimé.

L'invention permet ainsi de réaliser l'estimation de l'harmonisation au sol, notamment pendant la phase de calcul de la compensation des défauts magnétiques de fers durs et fers doux.

Dans des modes de réalisation, le procédé d'estimation des valeurs d'harmonisation d'un magnétomètre installé dans un engin mobile suivant l'invention comporte en outre une ou plusieurs des caractéristiques suivantes :

- l'estimation de l'angle parmi le premier ou le deuxième angle comprend les étapes de :

  - détermination des coordonnées du centre de l'ellipse par la demi-somme, sur l'axe des abscisses du plan de l'ellipse, de l'abscisse minimim et de l'abscisse maximum parmi les valeurs de champ acquises et par la demi-somme, sur l'axe des ordonnées du plan de l'ellipse, de l'ordonnée minimim et de l'ordonnée maximum parmi les valeurs de vecteurs de champ acquises ;
  - détermination dans le plan de l'ellipse du point, parmi les valeurs de vecteurs de champ acquises, à distance maximale du centre de l'ellipse ;
  - calcul de l'angle en fonction desdites coordonnées déterminées du centre de l'ellipse et des coordonnées dudit point déterminé à distance maximale du centre ;

- le procédé d'estimation comprend les étapes suivantes :

  - calcul d'une différence entre une valeur de cap de référence et une valeur de cap résultant d'une correction, en fonction des valeurs de hx et hy déterminées, d'une mesure du champ réalisée par le magnétomètre correspondant à un positionnement de l'engin mobile selon ledit cap ;

déduction de la valeur d'harmonisation verticale hz en fonction de l'égalité ci-dessous, en fonction de la différence calculée et en fonction des valeurs de hx et hy déterminées :

$$hz = [\delta\Psi - hy.(cos\theta . sin\varphi + tan(I).(-sin\theta . sin\varphi. cos\psi + cos\varphi. sin\psi)) - hx.(-sin\theta - tanI. cos\theta. cos\psi)] / (cos\varphi . cos\theta - tan(I).(sin\theta . cos\varphi . cos\psi + sin\varphi . sin\Psi)),$$

où :

I est l'inclinaison du champ magnétique terrestre audit positionnement,
$\psi$, $\theta$, $\varphi$ sont les angles d'attitude, respectivement de lacet, tangage et roulis de l'engin mobile audit positionnement et
$\delta\Psi$ représentant l'erreur de calcul de cap due aux défauts d'harmonisation ;

ladite égalité donnant hz est approximée par l'une des formules suivantes :

$$hz = \delta\Psi ;$$

$$hz = \delta\Psi / (1 - tan(I)^* sin\theta) ;$$

$$hz = \delta\Psi / (cos\varphi . cos\theta - tan(I).(sin\theta . cos\varphi . cos\psi + sin\varphi . sin\Psi)).$$

dans une première phase, lesdites valeurs d'harmonisation hx, hy, hz sont déterminées en fonction de mesures de valeurs de vecteurs de champ magnétique mesurées par le magnétomètre pendant que l'engin mobile est au sol, lesdites étapes suivantes étant mises en œuvre dans une phase ultérieures pour préciser les valeurs d'harmonisation, l'engin mobile étant en vol :

- acquisition d'une pluralité de valeurs de vecteurs de champ magnétique mesurées par le magnétomètre correspondant à des positionnements successifs de l'engin mobile en vol selon des caps successifs variés ;
- approximation de la matrice d'harmonisation telle que précisée en vol $[M_{harmosol}].[M_{harmovol}]$ par $[M_{harmosol}] + [M_{Harmovol}] - Id)$, où Id est la matrice Identité,

$$[M_{harmosol}] = \begin{bmatrix} 1 & hz & -hy \\ -hz & 1 & hx \\ hy & -hx & 1 \end{bmatrix}$$

et

$$[M_{harmovol}] = \begin{bmatrix} 1 & hzvol & -hyvol \\ -hzvol & 1 & hxvol \\ hyvol & -hxvol & 1 \end{bmatrix} ;$$

- lesdites valeurs d'harmonisation hxvol, hyvol, hzvol étant déterminées sur la base d'un algorithme récursif, en fonction des valeurs de vecteurs de champ magnétique acquises en vol, ledit algorithme récursif exploitant que les composantes verticales de champ magnétique obtenues après harmonisation en fonction de ladite approximation de $[M_{harmosol}].[M_{harmovol}]$ des valeurs vecteurs de champ magnétique sont égales à une constante ;

Suivant un deuxième aspect, la présente invention propose un programme d'ordinateur comportant des instructions logicielles qui, lorsqu'elles sont exécutées par un ordinateur, mettent en œuvre un procédé tel que défini ci-dessus.

**EP 3 712 559 A1**

Suivant un troisième aspect, la présente invention propose un dispositif électronique d'estimation des valeurs d'harmonisation d'un magnétomètre installé dans un engin mobile, ledit magnétomètre étant associé à son repère de référence XM, YM, ZM et l'engin mobile étant associé à son repère avion XA, YA, ZA, ledit dispositif étant adapté pour acquérir une pluralité de valeurs de vecteurs de champ magnétique mesurées par le magnétomètre correspondant à des positionnements successifs de l'engin mobile selon des caps successifs variés ;

ledit dispositif étant caractérisé en ce qu'il est adapté pour, pour déterminer l'harmonisation horizontale (hx, hy) où hx correspond à l'angle d'Euler associé à la rotation autour de XA, où hy correspond à l'angle d'Euler associé à la rotation autour de YA pour passer du repère de référence XM, YM, ZM du magnétomètre au repère avion XA, YA, ZA, estimer un premier angle égal à l'angle entre XM et le grand axe d'une ellipse définie dans le plan comprenant les deux axes XM, ZM par lesdites valeurs de champ acquises, déterminer hy comme égale audit premier angle estimé, estimer un deuxième angle égal à l'angle entre YM et le grand axe d'une ellipse définie dans le plan comprenant les deux axes YM, ZM par lesdites valeurs de vecteurs de champ acquises et déterminer - hx comme égale audit deuxième angle estimé.

Ces caractéristiques et avantages de l'invention apparaîtront à la lecture de la description qui va suivre, donnée uniquement à titre d'exemple, et faite en référence aux dessins annexés, sur lesquels :

[Fig 1] La figure 1 représente une vue d'une ensemble d'opérations mises en œuvre dans un mode de réalisation de l'invention ;

[Fig 2] La figure 2 est une vue d'un aéronef dans un mode de réalisation de l'invention ;

[Fig 3] La figure 3 représente schématiquement un système de détermination de cap 1 dans un mode de réalisation de l'invention ;

[Fig 4] La figure 4 est une vue illustrant les angles d'harmonisation entre le repère du magnétomètre 2 TMAG et le repère aéronef TA ;

[Fig 5] La figure 5 est un organigramme d'étapes mises en œuvre dans un mode de réalisation de l'invention ;

[Fig 6] La figure 6 est une vue illustrant le calcul de l'angle d'harmonisation hy dans un mode de réalisation de l'invention ;

[Fig 7] La figure 7 est une vue illustrant le calcul de l'angle d'harmonisation hx dans un mode de réalisation de l'invention.

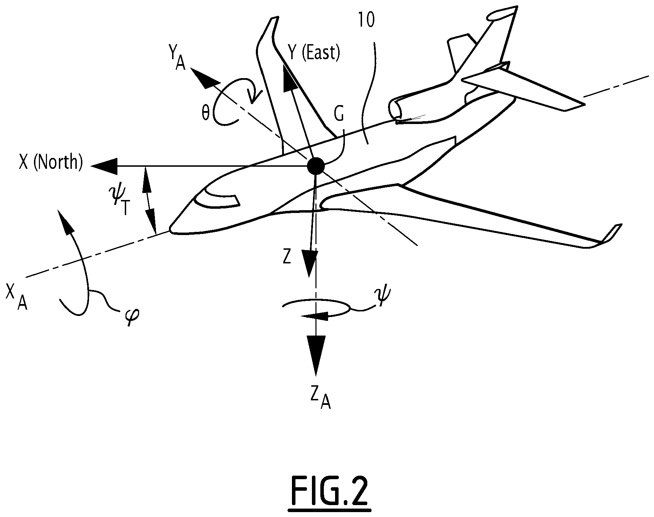

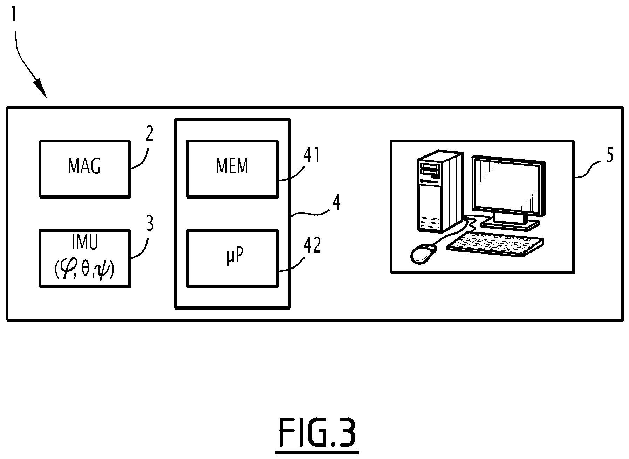

Considérons dans ce qui suit un aéronef 10 représenté en figure 2. Dans le mode de réalisation considéré, l'aéronef 10 comporte un système de détermination de cap 1, représenté en figure 3 et adapté pour déterminer un cap de l'aéronef de façon autonome par rapport à l'unité de navigation déterminant le cap primaire de l'aéronef. Il comprend par exemple pour ce faire un instrument secondaire d'Horizon artificiel, encore appelé « Stand-By attitude » (non représenté).

Le système de détermination de cap 1 selon l'invention comprend un magnétomètre 2, une Unité de Mesure Inertielle 3, un bloc de traitement 4 et une interface homme-machine 4.

Il permet de faciliter une procédure de compensation magnétique et de façon induite améliorer la qualité de la compensation, enfin pour restituer au pilote le cap autonome estimé.

Le bloc de traitement 4 est adapté pour acquérir en entrée et en temps-réel les mesures de champ magnétique délivrées par le magnétomètre 2.

L'Unité de Mesures Inertielles 3, comportant de façon usuelle trois accéléromètres et trois gyromètres, détermine les angles d'attitude de l'aéronef 10 (dans d'autres modes de réalisation, les angles d'attitude pourraient être déterminés en fonction d'un autre dispositif de détermination de position et d'orientation plus précise, par exemple une unité de navigation primaire, ou un cap GPS bi-antenne, orientation fournie en temps réel en entrée du bloc de traitement 4.

Différents repères sont considérés dans ce qui suit :

- le repère propre au magnétomètre, nommé ici TMAG, d'origine $O_M$, d'axes $X_M$, $Y_M$, $Z_M$ perpendiculaires entre eux constituant un trièdre de mesure magnétométrique (ou un repère de montage du magnétomètre et dans ce cas relié par une matrice d'harmonisation propre au magnétomètre calibrée en usine) ;
- le repère Aéronef, nommé ici TA, d'origine G point de référence de l'avion, par exemple son centre de gravité ou un point de référence mécanique de la structure, d'axes $X_A$, $Y_A$, $Z_A$ perpendiculaires entre eux usuellement où $X_A$ est l'axe longitudinal orienté vers le nez de l'aéronef (ligne de foi), $Y_A$ est parallèle aux ailes et dirigé vers l'aile droite, $Z_A$ étant lui dirigé vers le bas dans le sens croissant, comme représenté en figure 2 ;
- le repère Géographique Local, nommé ici TGL (encore appelé NorthEastDown) qui est lié au point courant où est l'aéronef 10 en altitude, i.e. mobile avec l'aéronef, d'origine le point de surface de la Terre à la verticale du centre de gravité G de l'aéronef, d'axes X, Y, Z perpendiculaires entre eux où le plan X, Y est un plan tangent à la surface de la Terre, X pointant vers le Nord Géographique (différent du Nord Magnétique), Z pointant vers le bas selon la verticale locale (cf. figure 2) ;
- le repère Aéronef Horizontal (en « vol horizontal »), nommé ici THORZ, d'origine G point de référence de l'avion, par exemple son centre de gravité, d'axes $X_{HORZ}$, $Y_{HORZ}$, $Z_{HORZ}$, déduit du repère TA après correction de l'assiette de l'aéronef définie ci-après, et donc $Z_{HORZ}$ parallèle à Z du repère TGL.;

Les angles d'attitude de l'aéronef sont définis par trois angles d'Euler : $\psi$ (Lacet autour de $Z_A$ ou cap géographique), $\theta$ (Tangage autour de $Y_A$) et $\varphi$ (Roulis, autour de $X_A$) comme représentés en figure 2. L'assiette de l'aéronef vs un repère horizontal THORZ est définie par les angles $\varphi$ et $\theta$. Ces angles d'Euler définissent la matrice de changement de repère, du repère de référence TGL vers le repère Avion à chaque instant ; les angles $\varphi$ et $\psi$ sont éléments de ]- $\pi$, + $\pi$], $\theta$ est élément de]- $\pi$/2, + $\pi$/2].

L'attitude de l'aéronef 10 est définie par le changement de repère TGL vers le repère TA.

La matrice $B (\varphi, \theta, \psi)$ des cosinus directeurs (convention aéronautique type II 3>2>1 angles de rotation Yaw $\Psi$ > Pitch $\theta$ > Roll $\varphi$) est la matrice inverse suivante :

$$B(\varphi, \theta, \psi) = \begin{bmatrix} \cos(\psi).\cos(\theta) & -\sin(\psi).\cos(\varphi)+\cos(\psi)\sin(\theta)\sin(\varphi) & \sin(\psi)\sin(\varphi)+\cos(\psi)\sin(\theta).\cos(\varphi) \\ \sin(\psi).\cos(\theta) & \cos(\psi).\cos(\varphi)+\sin(\psi).\sin(\theta)\sin(\varphi) & -\cos(\psi)\sin(\varphi)+\sin(\psi)\sin(\theta).\cos(\varphi) \\ -\sin(\theta) & \cos(\theta).\sin(\varphi) & \cos(\theta).\cos(\varphi) \end{bmatrix}$$

L'Unité de Mesures Inertielles ne permet pas de déterminer l'angle de Lacet $\psi$ et donc complétement la matrice B, d'où le besoin d'élaborer un cap gyromagnétique autonome. Les calculs sont ainsi réalisés dans un repère horizontal THORZ à partir des angles de roulis $\varphi$ et de tangage $\theta$ déterminés par L'Unité de Mesures Inertielles.

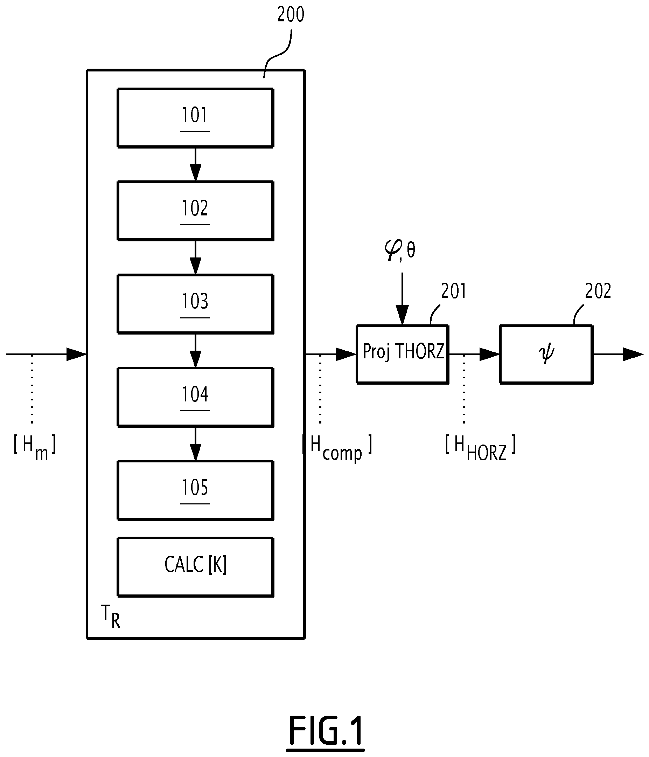

Le bloc de traitement 4 est adapté pour effectuer les opérations ci-dessous décrites en référence à la figure 1, afin de déterminer la valeur du cap magnétique de l'aéronef 10 en temps réel.

Par définition, le cap magnétique donne une orientation par rapport au Nord magnétique terrestre. Elle est déterminée dans le plan horizontal du lieu, i.e. dans $X_{HORZ}$, $Y_{HORZ}$.

Le bloc de traitement 4 est ainsi adapté, dans l'exemple considéré, pour collecter les mesures de champ magnétiques effectuées sous la forme de vecteurs tridimensionnels nommés $[H_m]$, pour ensuite effectuer une opération 200 de traitement de manière à compenser les défauts de mesures et les défauts magnétiques dans les valeurs de champ mesurées et pour délivrer le champ magnétique découlant de ces traitements sous la forme de vecteurs tridimensionnels nommés $[H_{COMP}]$, de composantes $HX_{COMP}$, $HY_{COMP}$, $HZ_{COMP}$.

Le bloc de traitement 4 est adapté pour effectuer une opération 201 de projection du vecteur $[H_{COMP}]$ ainsi délivré dans le repère horizontal THORZ correspondant à l'instant de mesure, le vecteur résultant de cette projection étant nommé $[H_{HORZ}]$, de composantes $HX_{HORZ}$, $HY_{HORZ}$, $HZ_{HORZ}$ :

$$\begin{bmatrix} HX_{HORZ} \\ HY_{HORZ} \\ HZ_{HORZ} \end{bmatrix} = \begin{bmatrix} \cos\theta & \sin\theta.\sin\varphi & \sin\theta.\cos\varphi \\ 0 & \cos\varphi & -\sin\varphi \\ -\sin\theta & \cos\theta.\sin\varphi & \cos\theta.\cos\varphi \end{bmatrix} \begin{bmatrix} HX_{COMP} \\ HY_{COMP} \\ HZ_{COMP} \end{bmatrix}$$

Enfin le bloc de traitement 4 est adapté pour effectuer une opération de détermination 202 du cap magnétique $\psi_{MAG}$ selon la formule suivante :

$$\psi_{MAG} = -\arctan\left(\frac{HX_{HORZ}}{HY_{HORZ}}\right)$$

Le cap magnétique ainsi déterminé est ensuite utilisé par exemple comme référence typiquement d'une boucle d'hybridation gyromagnétique pour affichage ou comme référence de cap pour une fonction d'AHRS (en anglais « Attitude and Heading Reference System »), plus largement, avec différents niveaux d'hybridation dans des modes de réalisation.

Les perturbateurs magnétiques en proximité du magnétomètre peuvent être modélisés comme suit :

- fers durs liés à la présence de matériaux ferromagnétiques aimantés ou de conducteurs électriques parcourus par des courants établis ;
- fers doux liés à des matériaux ferromagnétiques non aimantés qui dévient les lignes de champ conduisant à une erreur fonction de l'attitude de l'aéronef ;
- champs ré-induits en phase d'attitude dynamique (engendrés par courants de Foucault liés aux variations temporelles de flux magnétique dans la structure métallique de l'aéronef).

Ce modèle de perturbateurs magnétique simplifié est suffisant pour des vitesses angulaires limitées et pour la précision de cap visé, sans tenir compte des champs ré-induits en dynamique (engendrés par courants de Foucault liés aux variations temporelles de flux magnétique dans la structure métallique de l'aéronef).

Le champ mesuré perturbé dans un repère magnétomètre TMAG est modélisé comme suit, en fonction du champ magnétique théorique du lieu considéré dans le repère géographique Terrestre TGL et de l'attitude de l'aéronef 10 :

$$\overrightarrow{Hm} = [k].\overrightarrow{Ht} + \vec{b} \quad ou \quad \overrightarrow{Ht} = [K].(\overrightarrow{Hm} + \overrightarrow{B})$$

où $\vec{H_t}$ / $\overrightarrow{H_{tHm}}$ sont respectivement le champ magnétique théorique exprimé en repère TA / le champ magnétique mesuré exprimé en repère TMAG, « proche » de TA (typiquement moins de 30 mrad).

$\vec{b}$ : paramètres de perturbation fers durs, $[k]$ : paramètres fers doux.

Un modèle général de compensation du champ magnétique mesuré dans TMAG s'en déduit :

$$\begin{bmatrix} Hmx \\ Hmy \\ Hmz \end{bmatrix} = \begin{bmatrix} kxx & kxy & kxz \\ kyx & kyy & kyz \\ kzx & kzy & kzz \end{bmatrix} \begin{bmatrix} Htx \\ Hty \\ Htz \end{bmatrix} + \begin{bmatrix} bx \\ by \\ bz \end{bmatrix}$$

$$\begin{bmatrix} Htx \\ Hty \\ Htz \end{bmatrix} = \begin{bmatrix} Kxx & Kxy & Kxz \\ Kyx & Kyy & Kyz \\ Kzx & Kzy & Kzz \end{bmatrix} \begin{bmatrix} Hmx + Bx \\ Hmy + By \\ Hmz + Bz \end{bmatrix}$$

$$\vec{B} = \begin{bmatrix} B_x \\ B_y \\ B_z \end{bmatrix}$$

Avec vecteur de compensation fers durs ($\vec{B}=-\vec{b}$) et

$$[K] = \begin{bmatrix} K_{xx} & K_{xy} & K_{xz} \\ K_{yx} & K_{yy} & K_{yz} \\ K_{zx} & K_{zy} & K_{zz} \end{bmatrix}$$

matrice de compensation fers doux ($[K] = [k]^{-1}$).

Dans le mode de réalisation particulier considéré ici, le modèle de compensation utilisé est volontairement réduit, défini par $\vec{B}$ = B$_c$ et $[K]$ = K$_c$, et utilisé pour une compensation réalisée au sol avec le champ compensé H$_c$ (proche de H$_t$) = K$_c$ * H$_m$ + B$_c$. Ceci est justifié par la non observabilité mathématique au sol et donc à la très faible qualité d'estimation de certains paramètres « verticaux » qu'il est préférable de forcer à zéro en tenant compte de l'ordre de grandeur physique des paramètres « verticaux » non diagonaux.

Ainsi, en compensation au sol, une identification de 4ème ordre est appropriée avec b$_x$, b$_y$, k$_{xx}$=1, k$_{xy}$=k$_{yx}$, k$_{yy}$, et les approximations suivantes k$_{xz}$=k$_{zx}$=k$_{zx}$=k$_{yz}$=0, k$_{zz}$=1, bz=0.

$$Kc = \begin{bmatrix} Kcxx & Kcxy & 0 \\ Kcxy & Kcyy & 0 \\ 0 & 0 & 1 \end{bmatrix} \quad Hm = \begin{bmatrix} hmx \\ hmy \\ hmz \end{bmatrix} \quad Bc = \begin{bmatrix} Bcx \\ Bcy \\ 0 \end{bmatrix}$$

En approximation la matrice des fers doux est prise symétrique k$_{xy}$=k$_{yx}$, k$_{yz}$=k$_{zy}$, k$_{xz}$=k$_{zx}$ (en relation avec la déformée des lignes de champ et la physique d'un potentiel de champ dans un voisinage).

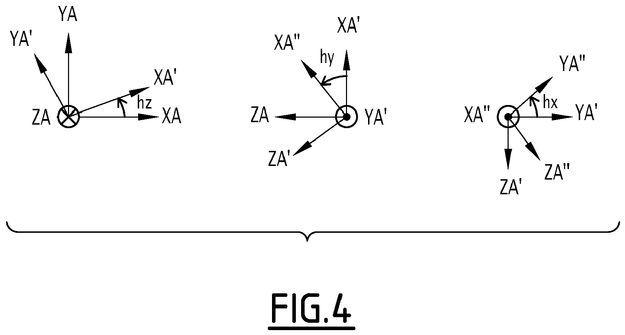

Comme expliqué plus haut, concernant les défauts de mesure cette fois, il convient de déterminer, puis corriger les trois angles, dits d'harmonisation, donnant l'orientation du repère du magnétomètre TMAG (i.e. du trièdre de mesure magnétométrique du capteur), par rapport au repère Aéronef TA une fois l'équipement installé sur l'aéronef 10. Il s'agit donc de connaître la matrice de changement de repère, matrice orthogonale dite de rotation et correspondant à la composition des trois rotations élémentaires des trois angles d'Euler en 3 dimensions. Ces trois angles, hx, hy, hz correspondant aux imprécisions dans le montage angulaire du magnétomètre sont représentés en figure 4 illustrant le passage du repère TA au repère TMAG via les rotations élémentaires d'angle de valeur hz (autour axe Z), puis d'angle de valeur hy (autour axe Y), puis d'angle de valeur hx (autour axe X) avec les trièdres ainsi transformés : respectivement le trièdre [XA,YA,ZA] devient le trièdre[XA',YA',ZA] après rotation de hz (autour de ZA), qui devient le trièdre [XA",YA',ZA'] après rotation autour de hy autour de YA', qui devient le trièdre [XA",YA",ZA"] après rotation de hx autour de XA" Les angles hx (angle de roulis), hy (angle de tangage) sont les angles d'harmonisation horizontale tandis que l'angle hz est l'angle d'harmonisation de lacet. Ces angles peuvent être représentés sous la forme d'une matrice dite d'harmonisation $M_{Harmo}$.

Par ailleurs, étant exposé les points suivants :

(1) Expression du champ théorique magnétique $\overrightarrow{H_{TA\,theo}}$ en repère TA à partir des caractéristiques du champ magnétique $\overrightarrow{H_{GL}}$ dans le repère TGL (champ de norme H0 et d'inclinaison de champ I, l'inclinaison de champ étant l'angle décrit par le champ avec sa composante horizontale, qui augmente avec la latitude sur le globe terrestre)

$$\overrightarrow{H_{TA\,theo}} = B^t.\overrightarrow{H_{GL}} \quad avec \quad \overrightarrow{H_{GL}} = \begin{bmatrix} H_N \\ H_E \\ H_V \end{bmatrix} = H_0.\begin{bmatrix} cos(I) \\ 0 \\ sin(I) \end{bmatrix}$$

(2) Projection du champ théorique magnétique en repère Aéronef Horizontal.

$$\overrightarrow{H_{HORZ\,theo}} = B\,(\varphi,\theta,\psi = 0)\,.\,\overrightarrow{H_{TA\,theo}}$$

(3) Projection du champ réel magnétique en repère Horizontal tenant compte des erreurs d'harmonisation du magnétomètre monté sur Avion, définies par la matrice anti-symétrique $M_{harmo}$ :

$$M_{harmo} = \begin{bmatrix} 1 & hz & -hy \\ -hz & 1 & hx \\ hy & -hx & 1 \end{bmatrix}$$

L'erreur induite par les harmonisations sur les composantes de champ s'en déduit :

$$\overrightarrow{\delta_{HORZ}} = \overrightarrow{H_{HORZ\,reel}} - \overrightarrow{H_{HORZ\,theo}} = B\,(\varphi,\theta,\psi = 0)\,.\,(M_{harmo} - Id)\,.\,B^t\,.\,\overrightarrow{H_{GL}}$$

(4) Expression de l'erreur de cap magnétique induite par différentielle du cap :

$$\Psi = -\,atan\left(\frac{H_{HORZY}}{H_{HORZX}}\right) => \delta\Psi = \left(\frac{d\psi}{dH_{HORZX}}\right).\delta H_{HORZX} + \left(\frac{d\psi}{dH_{HORZY}}\right).\delta H_{HORZY}$$

$$Soit\;\; \delta\psi = -\frac{1}{H_0.cos(I)}\,.\,(sin\psi\,.\,\delta H_{HORZX} + cos\psi\,.\,\delta H_{HORZY})$$

(5) Soit en injectant les composantes d'erreur $6H_{HORZX}$ et $\delta H_{HORZY}$ fonction des harmonisations hx, hy, hz (cf. point 3 ci-dessus) :

$$\delta\Psi = hz.\left(cos\varphi.cos\theta - \tan(I).(sin\theta.cos\varphi.cos\psi + sin\varphi.sin\Psi)\right) +$$
$$hy.\left(cos\theta.sin\varphi + \tan(I).(-sin\theta.sin\varphi.cos\psi + cos\varphi.sin\psi)\right) +$$
$$hx.(-sin\theta - \tan(I).cos\theta.cos\psi )$$

Plus spécifiquement, dans le cas de l'invention, les points suivants sont démontrés par les inventeurs dans un développement d'erreur analytique et validés en simulation pour quantifier les limites d'approximations et d'harmonisation :

- L'harmonisation hz peut être considérée comme une erreur séparable sur le calcul de cap pour une assiette proche de l'horizontale. Cette erreur reste séparable au premier ordre après compensation au sol (le défaut hz intervient en terme anti-symétrique combiné à la matrice des fers doux et conduit après compensation au sol à des pseudos fers durs résiduels non compensés en X et Y). Cette erreur liée à hz est majeure et requiert une estimation et correction au sol. De plus pour estimer hz au sol avec une précision suffisante, hx/y doivent être assez faibles dans les limites énoncées plus loin.
- Les harmonisations hx et hy ont au sol un impact de second ordre après compensation au sol. Par contre leur impact devient significatif en vol en manoeuvre, d'où l'importance de corriger hx/hy pour améliorer les performances de cap magnétique en vol.
- On montre analytiquement dans le produit de la matrice de fers doux et de la matrice d'harmonisation, que les angles d'harmonisation peuvent être estimés au premier ordre pour le cadre énoncé ici des approximations et des limites d'harmonisation. On s'appuie sur les propriétés générales des ellipsoïdes projetées en 2D en ellipses selon deux plans : en effet le vecteur champ trace une ellipsoïde pour les points mesurés selon l'hypothèse de modèle de défauts magnétiques énoncé préalablement, le calcul de norme de champ constant localement donnant l'équation en 3 D. On énonce ici l'idée particulière que les harmonisations hx/hy contribuent en projection dans les plans respectivement [XZ] / [YZ] à l'angle de l'axe principal de chacune des deux ellipses et que ces harmonisations peuvent être estimées en approximation au premier ordre via l'angle de ces deux ellipses.

Plus spécifiquement, dans le cas de l'invention, dans le bloc de traitement 4 est adapté pour déterminer les valeurs des angles d'harmonisation et pour corriger dans les mesures de champ magnétique mesurées par le magnétomètre, les erreurs d'harmonisation en fonction de ces valeurs.

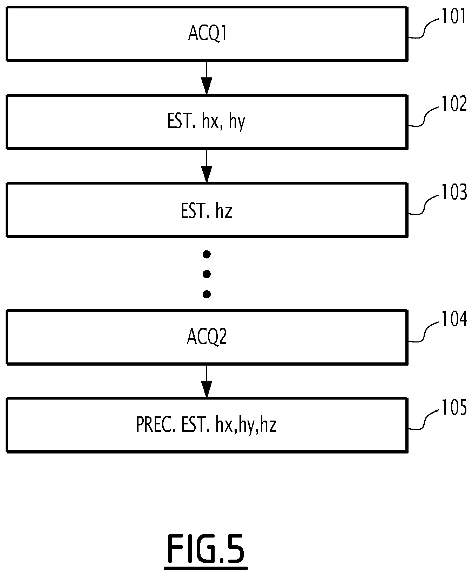

Ainsi dans un mode de réalisation, le bloc de traitement 4 comporte une mémoire 41 et un microprocesseur 42. La mémoire 41 comporte des instructions logicielles qui lorsqu'elles sont exécutées sur le microprocesseur 42, mettent en œuvre les étapes réalisées par le bloc de traitement 4 et détaillées ci-dessous en référence à la figure 5.

Dans le mode de réalisation considéré, les étapes 102 et 103 ont lieu au cours de l'opération 200.

Dans une phase préalable (ACQ1) 101 d'acquisition et de préparation, le champ magnétique est mesuré par le magnétomètre 2 tout au long d'un tour de cap de 360° décrit par l'aéronef au sol à partir d'un cap de référence si disponible, par exemple sur une aire au sol de compensation magnétique certifiée, lieu favorable d'un point de vue magnétique. Par exemple, la rotation au sol est de 1°/s à 5°/s maximum. Ces mesures de champ magnétique (des vecteurs en trois dimensions, mesurées dans le repère du magnétomètre) sont enregistrées chacune en correspondance avec l'attitude correspondante de l'aéronef 10 telle que délivrée par l'Unité de Mesure Inertielle 3.

Par exemple, un ensemble de mesures est réalisé avec acquisition à 60 Hz sur un tour au sol (plage rotation supérieure ou égale à de 360°) : soit compte-tenu de rotation entre 1°/s et 5°/s, toutes les 1 minute à 5 minutes d'angle sur un tour complet.

Puis un filtrage temporel des composantes de champ mesurées brutes et un même filtrage des attitudes (adapté au contexte de rotation au sol de 1°/s à 5°/s maximum) est réalisé, par exemple avec un filtre passe-bas FIR du 2ème ordre ou un filtre médian sur une fenêtre temporelle centrée (le cas échéant avec un filtre passe-bande en fonction des caractéristiques de bruit du magnétomètre 2).

Un critère de cohérence est ensuite appliqué avec vérification d'anomalie magnétique ou de perturbations au sens large, ainsi qu'un critère de stabilité et d'horizontalité pendant la phase de mesure. (via attitude Stand-By ou via une référence externe d'attitude si disponible), pour supprimer les mesures erronées.

Le principe consiste à intégrer les variations magnétiques sous forme de critères combinés sur les composantes de champ, la norme de champ et sur l'inclinaison magnétique. L'observation bénéficie des mesures d'horizontalité et de vitesse de rotation du Stand-by attitude. Deux fenêtres temporelles sont appliquées lors de la procédure dimensionnées pour la dynamique aéronef et la classe de dérive gyrométrique. La stabilité temporelle est évaluée sur les signaux mesurés par moyenne glissante et moyenne quadratique (rms de l'anglais « root mean square ») sur ces deux horizons temporels.

L'étape de filtrage et l'étape de vérification de critère sont réalisées suivant les modes de réalisation par le bloc de traitement 4 ou un autre module de traitement du système de détermination de cap 1.

Les valeurs de champ magnétique (i.e. les valeurs des coordonnées des vecteurs de champ magnétique) mesurées par le magnétomètre issues de l'étape d'acquisition et préparation et les informations d'attitude associées sont utilisées par le bloc de traitement 4 pour évaluer K et $\vec{B}$, i.e. le modèle de compensation, par exemple réduit tel qu'évoqué ci-dessus, à l'aide des méthodes de compensation connues (par exemple :

⇨ EP0041982A1 - Crouzet - 1981 - procédé de compensation de perturbations magnétiques dans la détermination d'un cap magnétique et dispositifs pour la mise en œuvre des procédés.

⇨ IEEE-AIAA Navigation conférence - Gebre Egziabher - Elkaim GH - 2001 - A non-linear two steps estimation algorithm for calibrating strapdown magnetometer.

⇨ Article of Stanford University - D. Gebre Egziabher- GH Elkaim - JD Powels - 2002 - calibration of strapdown magnetometer in the magnetic field

Ensuite, dans une étape (EST hx, hy) 102, le bloc de traitement 4 estime les valeurs d'harmonisation horizontales hx, hy :

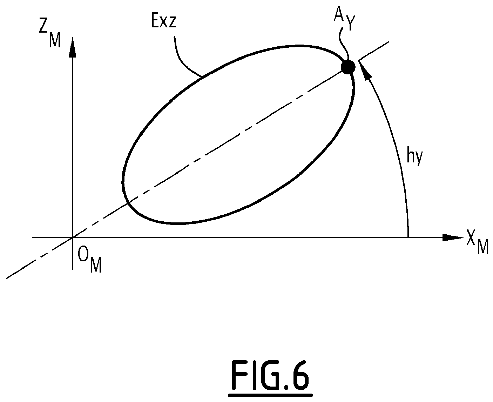

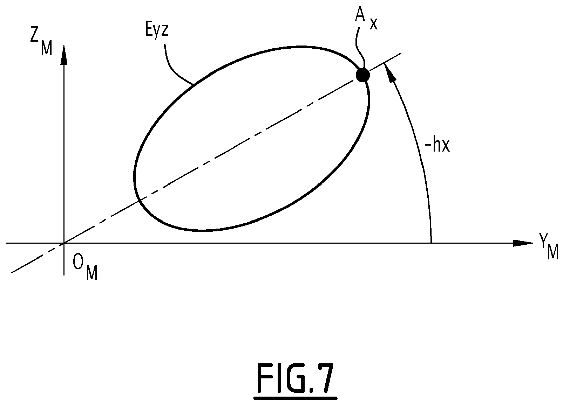

- il détermine l'angle entre l'axe $Y_M$ et le grand axe de l'ellipse $E_{YZ}$ décrite dans le plan $Y_M$, $Z_M$ par les valeurs de champ magnétique mesurées par le magnétomètre issues de l'étape 101 d'acquisition et préparation, et affecte à - hx la valeur d'angle ainsi déterminée (cf. figure 7) ;
- il détermine l'angle entre l'axe $X_M$ et le grand axe de l'ellipse $E_{XZ}$ décrite dans le plan $X_M$, $Z_M$ par les valeurs de champ magnétique mesurées par le magnétomètre issues de l'étape d'acquisition et préparation, affecte à hy la valeur d'angle ainsi déterminée (cf. figure 6).

Ceci dans un mode de réalisation est implémenté via un calcul algorithmique itératif de maximum/minimum de composantes en fonction de leur signe-pour identifier l'angle de chacune des deux ellipses en projection dans le repère magnétométrique en 2D. Une recherche de point caractéristique de l'ellipse permet d'estimer le centre et un point de plus grande distance du centre pour calculer l'arctangente. Une vérification du second point de distance maximale est appliquée aux mesures filtrées.

Par exemple dans le plan $[X_M Z_M]$, l'angle de l'ellipse $E_{XZ}$ approximant hy, l'estimateur suivant est implémenté en calcul récursif (nota : l'angle de l'ellipse projetée [YZ] approxime en réalité - Hx) :

- détermination des coordonnées center_ellX, center_ellZ du centre de l'ellipse par calcul des maximum et minimum des composantes de champ sur l'axe des ordonnées $Z_M$ et l'axe des abscisses $X_M$ : max($Z_M$), min($Z_M$), max($X_M$), min($X_M$) :

$$center\_ellZ=(max(Z_M)+min(Z_M))/2 ;$$

$$center\_ellX=(max(X_M)+min(X_M))/2 ;$$

- ces coordonnées permettent d'en déduire les coordonnées du point de l'ellipse à distance maximale du centre estimé de l'ellipse :
on nomme

$$d\_center= ( (((X-center\_ellX).^2) + ((Z-center\_ellZ).^2)) ).^{0.5};$$

on recherche le point, nommé (maxi_center) de coordonnées (Xmaxi_center, Zmaxi_center) parmi les valeurs de champ magnétique issues de l'étape 101 (ou obtenu par interpolation des dites valeurs) et qui se trouve à distance maximale du centre :

maxi_center=point correspondant à max(d_center);
mini_center=point correspondant à min(d_center) ; vérification (demi grand axe et demi petit axe), i.e. déterminer l'angle de direction de l'ellipse à partir des coordonnées du point du petit axe et comparer en cohérence avec l'estimation à partir des coordonnées du point du grand axe.

Calcul de l'angle direction ellipse, image du paramètre harmonisation recherché :

$$\text{Angle hy} = \text{atan2}((Zmaxi\_center - center\_ellZ), (-Xmaxi\_center + center\_ellX)) \text{ ;}$$

Un calcul récursif similaire est par exemple en outre mené pour déterminer hx, cette fois par rapport au plan dans le plan $[Y_M Z_M]$.

Puis le bloc de traitement 4 vérifie l'hypothèse de validité aux petits angles (i.e. que hx et hy sont inférieurs à 1.5°) et que la non-horizontalité de la piste est inférieure à 2°. Si non, les angles ne sont pas valides. Si oui, les valeurs de hx et hy déterminées sont considérés comme validées.

Puis dans une étape (EST hz) 103, l'angle d'harmonisation hz est à présent estimé, de la manière suivante :

- sous-étape 103_1 : la valeur d'harmonisation $M_{Harmo}$ est actualisée en fonction des valeurs de hx, hy estimées à l'étape 102 et en affectant d'abord la valeur 0 à hz :

$$M_{harmo} = \begin{bmatrix} 1 & hz & -hy \\ -hz & 1 & hx \\ hy & -hx & 1 \end{bmatrix} = \begin{bmatrix} 1 & 0 & -hy \\ 0 & 1 & hx \\ hy & -hx & 1 \end{bmatrix},$$

- sous-étape 103_2 : on calcule une erreur de cap d$\psi$ en faisant la différence entre une valeur de cap donnée $Cap_{ref}$ (dite de référence) correspondant à un des points de mesure de champ de l'étape 101 et la valeur de cap déterminée en fonction de la mesure du champ magnétique $\overrightarrow{H_{m\_ref}}$ quand l'aéronef pointait vers le cap $Cap_{ref}$ corrigée par la

$$\begin{bmatrix} 1 & 0 & -hy \\ 0 & 1 & hx \\ hy & -hx & 1 \end{bmatrix}$$

correction d'harmonisation horizontale définie par $\qquad\qquad$ et le cas échéant la correction de compensation, i.e. on calcule d$\psi$, par la formule :

$$d\psi = Cap_{ref} - M_{harmo}^{-1} \cdot K \left[\overrightarrow{H_{m\_ref}} + \vec{B}\right]$$

- sous-étape 103_3 : on déduit la valeur d'harmonisation verticale hz de cette valeur d$\psi$ d'erreur de cap magnétique ainsi calculée, des valeurs hx, hy déterminées à l'étape 102, de l'attitude $\varphi, \theta, \psi$ de l'aéronef correspondant à l'instant de mesure du champ magnétique $\overrightarrow{H_{m\_ref}}$, de l'inclinaison I au point de mesure et de la formule donnée au point 5 plus haut réécrite sous la forme :

$$hz =$$
$$[\delta\Psi - hy.\left(cos\theta \cdot sin\varphi + \tan(I).\left(-sin\theta \cdot sin\varphi.cos\psi + cos\varphi.sin\psi\right)\right) -$$
$$hx.\left(-sin\theta - tan(I).cos\theta.cos\psi\right)] / \left(cos\varphi \cdot cos\theta -\right.$$
$$\left.\tan(I).\left(sin\theta \cdot cos\varphi.cos\psi + sin\varphi.sin\Psi\right)\right),$$

$$(équation\ 1)$$

La matrice d'harmonisation est actualisée à l'aide de cette valeur hz pour la poursuite des calculs des valeurs de champ compensé $H_{comp}$ à partir des champs mesurés $H_m$ servant ultérieurement à calculer le cap, notamment sur la base des mesures de champ magnétique $H_m$ réalisées pendant le vol de l'aéronef, à l'aide de la formule $H_{comp} = M_{harmo}^{-1} \cdot K[\overrightarrow{H_m} + \vec{B}]$.

Dans un mode de réalisation, à l'étape 103_3, une des équations suivantes est utilisées à la place de l'équation 1, pour déterminer hz :

$$hz = \delta\Psi \text{ ;}$$

$$hz = \delta\Psi \,/\, (1 - \tan(I)^* \sin\theta)\,;$$

$$hz = \delta\Psi /\big( cos\varphi \,.\, cos\theta - \tan(I)\,.\,(sin\theta \,.\, cos\varphi \,.\, cos\psi + sin\varphi \,.\, sin\Psi)\big)\,;$$

les deux premières équations notamment dans le cas d'angles hz limités à 1.5 deg et d'erreurs d'horizontalité de piste inférieures à 2 deg.

Dans un mode de réalisation, l'étape 103_3 est réitérée en considérant deux caps de référence Cap$_{ref}$ : cap à 0° (i.e. au Nord) et à 90°(i.e. à l'Est) (ou encore à partir de deux directions quelconques espacées de 90°) ; les valeurs de hz sont calculées pour chacune de ces valeurs, puis comparées. Seulement si elles sont bien égales, la valeur correspondante de hz est retenue et la matrice d'harmonisation M$_{harmo}$ est actualisée à l'aide de cette valeur pour la poursuite des calculs de champ compensé servant ultérieurement à calculer le cap, notamment pendant le vol de l'aéronef.

La présente invention permet donc d'obtenir des valeurs d'harmonisation de façon simple, au sol.

Ceci permet ensuite dès le début du vol de l'aéronef, de calculer des valeurs de cap magnétique plus justes à partir des valeurs de champ magnétique issues des mesures réalisées par le magnétomètre embarqué, des valeurs de champ corrigées des défauts d'harmonisation.

Dans un mode de réalisation, une fois les étapes 101 à 103 réalisées au sol, le bloc de traitement 4 réalise, pendant le vol de l'aéronef 10, une étape de renforcement d'évaluation de l'harmonisation.

Ainsi dans une phase (ACQ2)104 d'acquisition en vol, le champ magnétique est mesuré par le magnétomètre 2.

Et des valeurs plus précises d'harmonisation sont déterminées dans une étape 105 (PREC EST) comme détaillé ci-dessous.

Le calcul d'harmonisation proposé ci-dessous s'appuie mathématiquement sur la séparabilité de la matrice d'harmonisation en somme (en tant que petits angles) d'une matrice d'harmonisation estimée au sol et d'une matrice complémentaire estimée en vol : approximation de [M$_{harmosol}$].[M$_{harmovol}$] par [M$_{harmosol}$] + [M$_{Harmovol}$] - Id), avec la

$$[M_{harmosol}] = \begin{bmatrix} 1 & hzsol & -hysol \\ -hzsol & 1 & hxsol \\ hysol & -hxsol & 1 \end{bmatrix},$$

matrice les valeurs hxsol, hysol, hzsol étant respectivement les valeurs hx, hy et hz calculées aux étapes 102 et 103.

$$[M_{harmovol}] = \begin{bmatrix} 1 & hzvol & -hyvol \\ -hzvol & 1 & hxvol \\ hyvol & -hxvol & 1 \end{bmatrix},$$

L'estimateur est réalisé par un algorithme récursif minimisant une fonction d'erreur, par exemple un algorithme de moindre-carré récursif, à partir des mesures de champ (trois composantes Hmx/Hmy/Hmz) obtenues par le magnétomètre 2 en vol, filtrées et de l'attitude de l'aéronef 10 telle que fournie par l'Unité de Mesure Inertielle 3 pour chacune de ces mesures avec application des mêmes caractéristiques de filtrage que sur les mesures magnétométriques. Selon l'état de l'art un moindre-carré résout une série d'équations linéaires sous forme matricielle ; en effet, étant posé les éléments suivants :

- observation construite à partir de fonctions de vecteurs de mesures sur plusieurs acquisitions (Y) = matrice d'état construite à partir de fonctions des vecteurs de mesures sur plusieurs acquisitions [Xm] * a (paramètres inconnus recherchés) ;

- le meilleur estimateur â de a au sens d'erreur quadratique est :

$$\hat{a} = [Xm^{\,t} * Xm]^{-1} * Xm^{\,t} * Y$$

- A chaque itération sont calculés un gain K$_G$ et une matrice de covariance P sans inversion de matrice ; ainsi à l'itération n

    ○

$$\hat{a}(n) = \hat{a}(n-1) + K_G(n) * (Y(n) - X(n)^t * \hat{a}(n-1))$$

°

$$P(n) = P(n-1) - K_G(n) * X(n)^t * P(n-1)$$

°

$$K_G(n) = P(n-1) * X(n) * [1 + X(n)^t * P(n-1) * X(n)]^{-1}$$

avec $[1+X(n)^{t*}P(n\text{-}1)*X(n)]^{-1}$ scalaire.

- La convergence de l'estimateur vers une solution â est détectée lorsque l'erreur quadratique ou la covariance sont suffisamment faibles (proche de zéro) avec possibilité d'arrêter les itérations sur de nouvelles acquisitions Dans un mode particulier de réalisation, l'estimateur présenté ici consiste, par exemple, à identifier la composante verticale du champ magnétique constante dans le repère TGL. Cette composante est obtenue par projection des composantes de champ mesurées dans le repère TMAG, compensées du modèle de fers et d'harmonisation identifiés préalablement au sol, en ajoutant pour le modèle de compensation vol, trois paramètres additionnels inconnus à identifier en vol : harmonisations vol hxvol/hyvol/hzvol (correspondant à Mharmovol).

Dans ce mode de réalisation l'observabilité est favorable à l'estimation de hxvol/hyvol, hzvol restant un défaut séparable au premier ordre comme montré dans la présente invention, aisément observable dès que l'assiette de l'aéronef varie, par exemple lors d'un premier virage en vol.

$$Hvert = -\sin\theta.Hxn_{compensvol} + \sin\varphi.\cos\varphi.Hyn_{compensvol} + \cos\theta.\cos\varphi.Hzn_{compensvol}$$

où $H_{vert}$ est la composante verticale du champ magnétique $Hvert =$ constante inconnue

*(équation 2)*

$Hxn_{compensol}/Hyn_{compensol}/Hzn_{compensol}$ sont les composantes x/y/z mesurées par le magnétomètre, à l'instant d'échantillonnage n.Te (Te période d'échantillonnage) compensées du modèle de fers et d'harmonisations identifiés préalablement au sol.

$$\text{Hn compensol} = \text{Ksol} . [\overrightarrow{H_n} + \vec{B}] \text{ et Ksol} = M_{harmosol}{}^{-1}. K$$

avec

$$\overrightarrow{H_n} = \begin{bmatrix} Hxn \\ Hyn \\ Hzn \end{bmatrix} \text{ et } \overrightarrow{H_{n\,compensol}} = \begin{bmatrix} Hxn\,compensol \\ Hyn\,compensol \\ Hzn\,compensol \end{bmatrix}$$

Le modèle de compensation vol ajoute les paramètres d'harmonisation inconnus comme suit :

$$\overrightarrow{H_{n\,compenvol}} = M_{harmovol}{}^{-1}. \overrightarrow{H_{n\,compensol}}$$

Le Moindre-Carré est construit dans ce mode particulier en exprimant l'équation 2 sous forme matricielle avec n lignes correspondant aux n mesures échantillonnées alimentant le Moindre-Carré :

$$\text{Observation } Y = \begin{bmatrix} Hve\,(1) \\ \vdots \\ Hve(n) \end{bmatrix}$$

avec Hve(i) = -(-$sin\theta$.$Hxn_{compensol}$ + $sin\varphi$.$cos\varphi$.$Hyn_{compensol}$ + $cos\theta$.$cos_\varphi$.$Hzn_{compensol}$), i= 1 à n, Hve(i) étant la composante verticale de champ mesurée à l'instant d'échantillonnage en volage iTe corrigée par les valeurs d'harmonisation obtenues au sol dans les étapes 102, 103.

- Matrice d'état

$$[Xm] = \begin{bmatrix} e1(1) & e2(1) & e3(1) & -1 \\ \vdots & \vdots & \vdots & \vdots \\ e1(n) & e2(n) & e3(n) & -1 \end{bmatrix}$$

avec

$$e1(n) = -sin\theta.Hyn_{compensol} - sin\varphi.cos\theta.Hzn_{compensol})$$

avec

$$e2(n) = -sin\theta.Hzn_{compensol} + cos\theta.cos\varphi.Hxn_{compensol})$$

avec

$$e3(n) = -cos\theta.cos\varphi.Hyn_{compensol} - cos\theta.sin\varphi.Hzn_{compensol})$$

- Vecteur inconnues quadratique est :
$$a = \begin{bmatrix} hzvol \\ hyvol \\ hxvol \\ Hvert \end{bmatrix}$$
et comme indiqué plus haut , le meilleur estimateur â de a au sens d'erreur

$$\hat{a} = [Xm^{\,t} * Xm]^{-1} * Xm^{\,t} * Y.$$

Ainsi :

- le renfort d'estimation consiste à ajouter trois inconnues complémentaires d'harmonisation, en sus des harmonisations issues de la correction sol (il ne s'agit pas d'une initialisation des paramètres d'harmonisation comme dans les méthodes existantes), la matrice d'harmonisation finale Mharmo étant la somme de Mharmosol et MHarmovol - Id).
- un critère d'observabilité sélectif peut être appliqué par axe selon l'attitude courante et l'écart d'attitude intégré dans le temps par exemple pour un axe vertical dans le repère TGL avec identification de la composante verticale de champ).
- l'estimateur présenté ici a la particularité d'utiliser les trois composantes de champ magnétique mesurées (moins sensible au bruit par rapport aux méthodes existantes utilisant la norme de champ, voire avec une seule composante comme la composante verticale); on observe ainsi sélectivement en fonction de critères d'observabilité cités plus haut la constance de chaque composante après dé-projection utilisant l'attitude courante de l'aéronef (ici, constance correspondant à différentielle temporelle nulle).

Dans un autre mode de réalisation, le bloc de traitement 4 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*).

L'invention permet une estimation au sol des harmonisations horizontales hx, hy par analyse de la forme géométrique du champ magnétique mesuré dans les plans [$Y_M$, $Z_M$] et [$X_M$, $Z_M$], de corriger au sol en partie des défauts importants d'harmonisation (pour hx, hy < 1,5 deg et Hz< 4 deg), avec une précision d'harmonisation horizontale de l'ordre de 0.5°, en regard de défauts de fers doux faibles sur aéronefs (par exemple fers doux non diagonaux de l'ordre de 3 mrad, admissibles sur une plage de 20 mrad pour les fers doux non diagonaux et de 20% pour les fers doux diagonaux)

Ce procédé de compensation au sol améliore considérablement la précision du cap, en particulier dans le cas d'un Stand-By attitude qui intégrerait une fonction cap autonome, avec un gain de précision cap en vol de l'ordre de 1° à comparer au budget global de 4° en erreurs quadratiques (Cf §2.4).

Les inventeurs ont démontré et validé dans un développement d'erreur mathématique que l'harmonisation hz peut être considérée comme une erreur séparable sur le calcul du cap pour une assiette proche de l'horizontale et que cette erreur reste séparable au premier ordre après compensation. L'erreur hz est majeure et requiert donc une estimation et une correction au sol.

Le principe de correction des harmonisations horizontales du magnétomètre ne nécessite pas notamment :

- de mesure des harmonisations par inclinomètres intégrés au magnétomètre,
- de mesure des harmonisations par visée ou de moyen externe, générateur de champ, ni de relevés externes de valeurs de champ,
- de mouvement d'assiette pendant l'exécution d'un tour de cap 360° au sol sur piste,
- de procédure par mesures de champ pour plusieurs assiettes magnétomètre obtenues via un support ajustable.

La présente invention décrit la prise en compte d'une matrice d'harmonisation pour compenser les défauts d'installation du magnétomètre (petits angles d'imprécision, de valeur absolue inférieure à 30 mrad (1.71 degrés))Dans un mode de réalisation, il est également pris en compte une matrice d'harmonisation du magnétomètre pour prendre en compte différentes possibilités de montage du magnétomètre dans la structure ; par exemple, matrice de changement de repère correspondant au retournement de l'axe ZM de 180°par rapport à ZA, idem ou pour I des axes YM et XM par rapport à YA et XA, ou par exemples avec une matrice de changement de repère « grands angles » pour des angles notables de l'ordre de 20 à 90 deg de rotation élémentaires par rapport à Z/Y/X.

La présente invention a été exposée ci-dessus relativement à un aéronef. Elle est applicable à tout type d'engin mobile, par exemple de type sous-marin, terrestre, marin, etc.

**Revendications**

1. Procédé d'estimation des valeurs d'harmonisation d'un magnétomètre (2) installé dans un engin mobile, ledit magnétomètre étant associé à son repère de référence XM, YM, ZM et l'engin mobile étant associé à son repère avion XA, YA, ZA, ledit procédé, mis en œuvre, par un dispositif électronique, comprenant une étape d'acquisition d'une pluralité de valeurs de vecteurs de champ magnétique mesurées par le magnétomètre correspondant à des positionnements successifs de l'engin mobile selon des caps successifs variés ;

   ledit procédé étant **caractérisé en ce qu'**il comprend en outre une étape de détermination de l'harmonisation horizontale (hx, hy) où hx correspond à l'angle d'Euler associé à la rotation autour de $X_A$, où hy correspond à l'angle d'Euler associé à la rotation autour de $Y_A$ pour passer du repère de référence $X_M$, $Y_M$, $Z_M$ du magnétomètre au repère avion $X_A$, $Y_A$, $Z_A$ comprenant les étapes suivantes :

   - estimation d'un premier angle égal à l'angle entre $X_M$ et le grand axe d'une ellipse définie, dans le plan comprenant les deux axes $X_M$, $Z_M$, par lesdites valeurs de vecteurs de de champ acquises ;
   - détermination de hy comme égale audit premier angle estimé ;
   - estimation d'un deuxième angle égal à l'angle entre $Y_M$ et le grand axe d'une ellipse définie, dans le plan comprenant les deux axes $Y_M$, $Z_M$, par lesdites valeurs de vecteurs de champ acquises ;
   - détermination de - hx comme égale audit deuxième angle estimé.

2. Procédé d'estimation des valeurs d'harmonisation d'un magnétomètre (2) installé dans un engin mobile selon la revendication 1, selon lequel l'estimation de l'angle parmi le premier ou le deuxième angle comprend les étapes de :

   - détermination des coordonnées du centre de l'ellipse par la demi-somme, sur l'axe des abscisses du plan de l'ellipse, de l'abscisse minimim et de l'abscisse maximum parmi les valeurs de champ acquises et par la demi-somme, sur l'axe des ordonnées du plan de l'ellipse, de l'ordonnée minimim et de l'ordonnée maximum parmi les valeurs de vecteurs de champ acquises ;

- détermination dans le plan de l'ellipse du point, parmi les valeurs de vecteurs de champ acquises, à distance maximale du centre de l'ellipse ;
- calcul de l'angle en fonction desdites coordonnées déterminées du centre de l'ellipse et des coordonnées dudit point déterminé à distance maximale du centre.

**3.** Procédé d'estimation des valeurs d'harmonisation d'un magnétomètre (2) installé dans un engin mobile selon la revendication 1 ou 2, comprenant les étapes suivantes :

- calcul d'une différence entre une valeur de cap de référence et une valeur de cap résultant d'une correction, en fonction des valeurs de hx et hy déterminées, d'une mesure du champ réalisée par le magnétomètre correspondant à un positionnement de l'engin mobile selon ledit cap ;
déduction de la valeur d'harmonisation verticale hz en fonction de l'égalité ci-dessous, en fonction de la différence calculée et en fonction des valeurs de hx et hy déterminées :

$$hz =$$

$$[\delta\Psi - hy.\left(cos\theta . sin\varphi + \tan(I).(-sin\theta . sin\varphi. cos\psi + cos\varphi. sin\psi)\right) -$$

$$hx.(-sin\theta - tan\,(I).cos\theta. cos\psi)\,]\,/\left(cos\varphi . cos\theta - \tan(I).(sin\theta . cos\varphi . cos\psi +\right.$$

$$\left. sin\varphi . sin\Psi)\right),$$

où :

I est l'inclinaison du champ magnétique terrestre audit positionnement,
$\psi$, $\theta$, $\varphi$ sont les angles d'attitude, respectivement de lacet, tangage et roulis de l'engin mobile audit positionnement et
$\delta\Psi$ représentant l'erreur de calcul de cap due aux défauts d'harmonisation.

**4.** Procédé d'estimation des valeurs d'harmonisation d'un magnétomètre (2) installé dans un engin mobile selon la revendication 3, selon lequel ladite égalité donnant hz est approximée par l'une des formules suivantes :

$$hz = \delta\Psi \; ;$$

$$hz = \delta\Psi \, / \, (1 - \tan(I)^* \, sin\theta) \; ;$$

$$hz = \delta\Psi / \left( cos\varphi . cos\theta - \tan(I).(sin\theta . cos\varphi . cos\psi + sin\varphi . sin\Psi)\right).$$

**5.** Procédé d'estimation des valeurs d'harmonisation d'un magnétomètre (2) installé dans un engin mobile selon la revendication 3, selon lequel dans une première phase, lesdites valeurs d'harmonisation hx, hy, hz sont déterminées en fonction de mesures de valeurs de vecteurs de champ magnétique mesurées par le magnétomètre pendant que l'engin mobile est au sol, lesdites étapes suivantes étant mises en œuvre dans une phase ultérieures pour préciser les valeurs d'harmonisation, l'engin mobile étant en vol :

- acquisition d'une pluralité de valeurs de vecteurs de champ magnétique mesurées par le magnétomètre correspondant à des positionnements successifs de l'engin mobile en vol selon des caps successifs variés ;
- approximation de la matrice d'harmonisation telle que précisée en vol [M$_{harmosol}$].[M$_{harmovol}$] par [M$_{harmosol}$] + [M$_{Harmovol}$] - Id), où Id est la matrice Identité,

$$[\text{M}_{harmosol}] = \begin{bmatrix} 1 & hz & -hy \\ -hz & 1 & hx \\ hy & -hx & 1 \end{bmatrix}$$

et

$$[M_{harmovol}] = \begin{bmatrix} 1 & hzvol & -hyvol \\ -hzvol & 1 & hxvol \\ hyvol & -hxvol & 1 \end{bmatrix};$$

- lesdites valeurs d'harmonisation hxvol, hyvol, hzvol étant déterminées sur la base d'un algorithme récursif, en fonction des valeurs de vecteurs de champ magnétique acquises en vol, ledit algorithme récursif exploitant que les composantes verticales de champ magnétique obtenues après harmonisation en fonction de ladite approximation de $[M_{harmosoL}].[M_{harmovol}]$ des valeurs vecteurs de champ magnétique sont égales à une constante.

6. Programme d'ordinateur comportant des instructions logicielles qui, lorsqu'elles sont exécutées par un ordinateur, mettent en œuvre un procédé suivant l'une des revendications 1 à 5.

7. Dispositif électronique (4) d'estimation des valeurs d'harmonisation d'un magnétomètre (2) installé dans un engin mobile, ledit magnétomètre étant associé à son repère de référence XM, YM, ZM et l'engin mobile étant associé à son repère avion XA, YA, ZA, ledit dispositif étant adapté pour acquérir une pluralité de valeurs de vecteurs de champ magnétique mesurées par le magnétomètre correspondant à des positionnements successifs de l'engin mobile selon des caps successifs variés ; ledit dispositif étant **caractérisé en ce qu'**il est adapté pour, pour déterminer l'harmonisation horizontale (hx, hy) où hx correspond à l'angle d'Euler associé à la rotation autour de $X_A$, où hy correspond à l'angle d'Euler associé à la rotation autour de $Y_A$ pour passer du repère de référence $X_M$, $Y_M$, $Z_M$ du magnétomètre au repère avion $X_A$, $Y_A$, $Z_A$, estimer un premier angle égal à l'angle entre $X_M$ et le grand axe d'une ellipse définie dans le plan comprenant les deux axes $X_M$, $Z_M$ par lesdites valeurs de champ acquises, déterminer hy comme égale audit premier angle estimé, estimer un deuxième angle égal à l'angle entre $Y_M$ et le grand axe d'une ellipse définie dans le plan comprenant les deux axes $Y_M$, $Z_M$ par lesdites valeurs de vecteurs de champ acquises et déterminer - hx comme égale audit deuxième angle estimé.

8. Dispositif (4) d'estimation des valeurs d'harmonisation d'un magnétomètre (2) installé dans un engin mobile selon la revendication 7, adapté pour estimer l'angle parmi le premier ou le deuxième angle par

- la détermination des coordonnées du centre de l'ellipse par la demi-somme, sur l'axe des abscisses du plan de l'ellipse, de l'abscisse minimim et de l'abscisse maximum parmi les valeurs de champ acquises et par la demi-somme, sur l'axe des ordonnées du plan de l'ellipse, de l'ordonnée minimim et de l'ordonnée maximum parmi les valeurs de vecteurs de champ acquises ;
- la détermination dans le plan de l'ellipse du point, parmi les valeurs de vecteurs de champ acquises, à distance maximale du centre de l'ellipse ; et le
- calcul de l'angle en fonction desdites coordonnées déterminées du centre de l'ellipse et des coordonnées dudit point déterminé à distance maximale du centre.

9. Dispositif (4) d'estimation des valeurs d'harmonisation d'un magnétomètre (2) installé dans un engin mobile selon la revendication 7 ou 8, adapté pour calculer une différence entre une valeur de cap de référence et une valeur de cap résultant d'une correction, en fonction des valeurs de hx et hy déterminées, d'une mesure du champ réalisée par le magnétomètre correspondant à un positionnement de l'engin mobile selon ledit cap, pour déduire la valeur d'harmonisation verticale hz en fonction de l'égalité ci-dessous, en fonction de la différence calculée et en fonction des valeurs de hx et hy déterminées :

$$hz =$$
$$[\delta\Psi - hy.(cos\theta . sin\varphi + \tan(I).(-sin\theta . sin\varphi.cos\psi + cos\varphi.sin\psi)) -$$
$$hx.(-sin\theta - \tan(I).cos\theta.cos\psi)] / (cos\varphi . cos\theta - \tan(I).(sin\theta . cos\varphi .cos\psi +$$
$$sin\varphi . sin\Psi)),$$

où :

I est l'inclinaison du champ magnétique terrestre audit positionnement,
$\psi, \theta, \varphi$ sont les angles d'attitude, respectivement de lacet, tangage et roulis de l'engin mobile audit positionnement

et

$\delta\Psi$ représentant l'erreur de calcul de cap due aux défauts d'harmonisation.

10. Dispositif (4) d'estimation des valeurs d'harmonisation d'un magnétomètre installé dans un engin mobile selon la revendication 9, dans lequel ladite égalité donnant hz est approximée par l'une des formules suivantes :

$$hz = \delta\Psi \; ;$$

$$hz = \delta\Psi \,/\, (1 - \tan(I)^* \sin\theta) \; ;$$

$$hz = \delta\Psi / \big( \cos\varphi . \cos\theta - \tan(I).(\sin\theta . \cos\varphi . \cos\psi + \sin\varphi . \sin\Psi) \big).$$

200

101

102

103

104

105

CALC [K]

$T_R$

[ $H_m$ ]

$H_{comp}$ ]

$\varphi, \theta$

201

Proj THORZ

[ $H_{HORZ}$ ]

202

$\psi$

FIG.1

$$\underline{\text{FIG.2}}$$

## FIG.3

## FIG.4

ACQ1 — 101

EST. hx, hy — 102

EST. hz — 103

ACQ2 — 104

PREC. EST. hx,hy,hz — 105

## FIG.5

## FIG.6

FIG.7

Europäisches
Patentamt

European
Patent Office

Office européen
des brevets

# RAPPORT DE RECHERCHE EUROPEENNE

Numéro de la demande

EP 20 16 3481

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 4 539 760 A (MARCHENT BRIAN G [GB] ET AL) 10 septembre 1985 (1985-09-10) | 1-4,6-10 | INV.<br>G01C17/38<br>G01C25/00 |
| A | * colonne 3, ligne 17 - colonne 7, ligne 53; figures 1-6 * | 5 | |
| A | US 2009/254294 A1 (DUTTA GOUTAM [IN]) 8 octobre 2009 (2009-10-08)<br>* alinéas [0025] - [0029], [0074] - [0077], [0097], [0101] - [0133]; figures 3-9,11 * | 1-10 | |
| A | WO 88/00330 A1 (MAGNAVOX CO [US]) 14 janvier 1988 (1988-01-14)<br>* page 34, ligne 37 - page 36, ligne 16; figure 1 * | 1-10 | |
| A | US 7 930 148 B1 (FIGARO DAVY [US] ET AL) 19 avril 2011 (2011-04-19)<br>* page 3, lignes 1-10 *<br>* page 8, ligne 45 - page 10, ligne 11 * | 1-10 | |
| A | EP 0 502 771 A1 (AEROSPATIALE [FR]) 9 septembre 1992 (1992-09-09)<br>* page 8, ligne 32 - page 12, ligne 21 * | 1-10 | DOMAINES TECHNIQUES RECHERCHES (IPC)<br>G01C<br>G01R |

Le présent rapport a été établi pour toutes les revendications

| Lieu de la recherche | Date d'achèvement de la recherche | Examinateur |
|---|---|---|
| La Haye | 7 août 2020 | Gagin, Thibaut |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 16 3481

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-08-2020

| Document brevet cité au rapport de recherche | | Date de publication | Membre(s) de la famille de brevet(s) | | Date de publication |
|---|---|---|---|---|---|
| US 4539760 | A | 10-09-1985 | JP | H0376685 B2 | 06-12-1991 |
| | | | JP | H0477845 B2 | 09-12-1992 |
| | | | JP | S5991311 A | 26-05-1984 |
| | | | JP | S59155714 A | 04-09-1984 |
| | | | US | 4539760 A | 10-09-1985 |
| | | | US | 4546550 A | 15-10-1985 |
| US 2009254294 | A1 | 08-10-2009 | US | 2009254294 A1 | 08-10-2009 |
| | | | US | 2009259424 A1 | 15-10-2009 |
| | | | US | 2015247739 A1 | 03-09-2015 |
| WO 8800330 | A1 | 14-01-1988 | CA | 1263704 A | 05-12-1989 |
| | | | EP | 0276249 A1 | 03-08-1988 |
| | | | JP | H01500618 A | 01-03-1989 |
| | | | US | 4797841 A | 10-01-1989 |
| | | | WO | 8800330 A1 | 14-01-1988 |
| US 7930148 | B1 | 19-04-2011 | AUCUN | | |
| EP 0502771 | A1 | 09-09-1992 | CA | 2062408 A1 | 08-09-1992 |
| | | | DE | 69202178 T2 | 28-09-1995 |
| | | | EP | 0502771 A1 | 09-09-1992 |
| | | | FR | 2673712 A1 | 11-09-1992 |
| | | | US | 5321631 A | 14-06-1994 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0041982 A1, Crouzet

**Littérature non-brevet citée dans la description**

- **GEBRE EGZIABHER ; ELKAIM GH.** A non-linear two steps estimation algorithm for calibrating strapdown magnetometer. *IEEE-AIAA Navigation conférence,* 2001

- calibration of strapdown magnetometer in the magnetic field. **D. GEBRE EGZIABHER ; GH ELKAIM ; JD POWELS.** Stanford University. 2002